# EUROPÄISCHE PATENTANMELDUNG

(11) **EP 3 382 864 A1**
(43) Veröffentlichungstag der Anmeldung: **03.10.2018**
(21) Anmeldenummer: 17163538.6
(22) Anmeldetag: 29.03.2017
(51) Int. Cl.: H02K 15/00, H02K 17/16

(54) **HYBRID-KÄFIGLÄUFER**

(71) Anmelder: Siemens Aktiengesellschaft, 80333 München (DE)
(72) Erfinder: Brandl, Konrad, 93107 Thalmassing (DE); Großhauser, Johannes, 91161 Hilpoltstein (DE); Pfaller, Maximilian, 90537 Feucht (DE); Scharf, Uwe, 91126 Schwabach (DE); Trepper, André, 91052 Erlangen (DE)

(57) **Zusammenfassung**

Die Erfindung betrifft einen Käfigläufer einer Asynchronmaschine (1), mit Leitern (9) in Nuten (12) eines magnetfeldführenden Läufers und im Bereich der Stirnseiten des magnetfeldführenden Läufers elektrisch leitende Kurzschlussringe (6), die die Leiter (9) elektrisch verbinden, welche Kurzschlussringe (6) zumindest zwei unterschiedlich elektrisch leitende Materialien aufweisen.

## Beschreibung

Die Erfindung betrifft einen Käfigläufer einer Asynchronmaschine, die Asynchronmaschine, die Verwendung dieser Asynchronmaschine und ein Verfahren zur Herstellung eines Käfigläufers einer Asynchronmaschine.

Käfigläufer von Asynchronmaschinen werden normalerweise im Aluminiumdruckguss hergestellt. Bei großen Volumina und Gießquerschnitten kommt es jedoch durch die Erstarrungsschrumpfung und die geringe Nachspeisung des Gussmaterials während des Gussprozesses zu einer ausgeprägten Lunkerbildung im Bereich der Leiter und des Kurzschlussringes, die u.a. den elektrisch leitenden Querschnitt erheblich reduzieren.

Je nach Lage und Größe der Lunker im Käfigläufer kann dies Auswirkungen auf die Funktionalität des Asynchronmotors haben. Als besonders kritisch haben sich dabei die Lunkerbildungen im Kurzschlussring im Bereich des Übergangs zu den Läuferstäben herausgestellt.

Diesem Problem wurde bisher auf der der Einfüllseite der Metallschmelze abgewandten Seite des Läufers durch eine aufwändige Geometrie des Gusswerkzeugs entgegengetreten, was einer kompakten Bauform des Käfigläufers und damit einer Asynchronmaschine entgegen steht.

Der Erfindung steht demnach die Aufgabe zugrunde, einen kompakten energieeffizienten Käfigläufer zu schaffen, der auch für größere Asynchronmaschinen (Achshöhe größer 500) geeignet ist und sich durch eine kompakte Bauweise von Asynchronmaschinen auszeichnet. Des Weiteren soll ein einfaches Herstellverfahren dieses Käfigläufers bereitgestellt werden, das eine reproduzierbare Qualität des Käfigläufers liefert.

Die Lösung der gestellten Aufgabe gelingt durch einen Käfigläufer einer Asynchronmaschine, mit Leiterstäben in Nuten eines magnetfeldführenden Läufers und im Bereich der Stirnseiten des magnetfeldführenden Läufers elektrisch leitende Kurzschlussringe, die die Leiterstäbe elektrisch verbinden, welche Kurzschlussringe zumindest zwei unterschiedlich elektrisch leitende Materialien aufweisen.

Die Lösung der gestellten Aufgabe gelingt ebenfalls durch eine Asynchronmaschine mit einem erfindungsgemäßen Käfigläufer.

Die Lösung der gestellten Aufgabe gelingt ebenfalls durch die Verwendung einer Asynchronmaschine mit einem erfindungsgemäßen Käfigläufer als Antrieb in der Nahrungsmittelindustrie, Rohstoffindustrie oder Bekleidungsindustrie.

Die Lösung der gestellten Aufgabe gelingt ebenfalls durch ein Verfahren zur Herstellung eines erfindungsgemäßen Käfigläufers durch folgende Schritte:
- Bereitstellen eines magnetfeldführenden Läufers,
- Bereitstellen einer Gussform, die als Matrize für die Kontur eines Kurzschlussrings des Käfigläufers dient und im Bereich der Stirnseiten des magnetfeldführenden Läufers angeordnet ist,
   dabei Einsetzen zumindest eines Einlegeteils aus einem zweiten elektrisch leitfähigen Material zumindest in die Gussform,
- Eingießen einer Metallschmelze aus einem ersten elektrisch leitfähigen Material in die Nuten oder verbleibende Nutenräume und in die zwischen der Innenkontur der Gussform und dem Einlegeteil verbleibenden Zwischenräume des Kurzschlussrings,
- erstarren lassen der Metallschmelze.

Ein Käfigläufer weist dabei folgende Abschnitte und Elemente auf. Ein magnetfeldführendes Element aus gesintertem Material oder aus hintereinander angeordneten Blechen, in insbesondere Dynamoblechen vorgegebener Qualität und Dicke. Dieses magnetfeldführende Element ist im Wesentlichen zylinderförmig ausgeführt und weist im Bereich seiner Mantelfläche von einer Stirnseite zu anderen verlaufende Nuten auf, die zur Mantelfläche hin geschlossen oder halb offen oder offen ausgeführt sind. In den Nuten sind Leiter angeordnet. An den Stirnseiten sind direkt an diese anliegend oder davon axial beabstandet Kurzschlussringe vorgesehen, die die Leiter an den Stirnseiten elektrisch kurzschließen.

Der Kurzschlussring ist aus einem Einlegeteil aus einem zweiten elektrisch leitfähigen Material, z.B. Kupferteil, das von einer Schmelze aus einem ersten elektrisch leitfähigen Material, z.B. einer Aluminiumschmelze umgeben ist.

Die Leiter sind dabei entweder aus einem ersten elektrisch leitfähigen Material oder aus einem Einlegeteil, Leiterstab aus einem zweiten elektrisch leitfähigen Material, z.B. Kupferstab, das von einer Schmelze aus dem ersten elektrisch leitfähigen Material, z.B. Aluminiumschmelze umgeben ist.

Erfindungsgemäß wird nunmehr zur Vermeidung von Lunker im Kurzschlussring, insbesondere im Übergang zwischen Leiter und Kurzschlussring das Gießvolumen bzw. der Gießquerschnitt durch einen Einlegeteil reduziert, wobei insbesondere das Einlegeteil des Kurzschlussrings eine verbesserte elektrische Leitfähigkeit als das eingegossene Material aufweist.

Dies ist insbesondere durch den Einsatz von Kupfer im Vergleich zu Aluminiumguss möglich. Damit wird der Querschnitt von dem vergleichsweise schlechter leitenden Material im Gussteil anteilig reduziert, wobei sich damit auch der notwendige Bauraum des Käfigläufers und damit für die Asynchronmaschine reduziert.

Vorteilhafterweise erfolgt die Anbindung des Einlegeteils aus Kupfer mit dem Aluminiumguss stoffschlüssig über eine niedrigschmelzende Phase. Eine Beschichtung des zumindest einen Einlegeteils sowohl von Kurzschlussring als des zumindest einen Einlegeteils (Leiterstab) der jeweiligen Nut mit Zinn unterstützt die Kinetik der Phasenreaktion unter den prozessbedingten Randbedingungen. Somit kann auch insbesondere auf der der Einfüllseite abgewandten Seite des Käfigläufers eine prozesssichere und energieeffiziente Anbindung des Aluminiumgusses an das Einlegeteil realisiert werden.

Erfindungsgemäß wird damit einer Lunkerbildung auch bei größeren Gießvolumina und Gießquerschnitten, wie sie beispielsweise bei größeren Achshöhen (größer 400mm über 800mm bis zu 1200mm und darüber hinaus) auftreten, vorgebeugt. Damit lassen sich auch vergleichsweise große Käfigläufer mit gegossenen Käfigen herstellen.

Durch die Einlegeteile kann nunmehr das Schussgewicht an Aluminiumschmelze verringert werden, da weniger "Volumen gefüllt werden muss". Damit kann die Fertigung weiterhin mit den bei kleineren Käfigläufern bewährten Anlagen arbeiten. Damit ist auch die Werkzeugkonstruktion einfach und kostengünstiger und der Kurzschlussring kann mit einer vergleichsweise einfacheren Geometrie ausgestattet werden.

Durch Einsetzen des Einlegeteils in den Kurzschlussring, das eine bessere elektrische Leitfähigkeit aufweist als das Aluminium wird nunmehr eine Verringerung des Querschnitts des Kurzschlussrings erreicht. Dadurch reduziert sich der benötigte, insbesondere axiale Bauraum, in beiden Richtungen, der dann gegebenenfalls zu einer kompakteren Bauweise des Antriebs oder zur verbesserten Motorkühlung genutzt werden kann.

Durch Einsatz des Einlegeteils im Kurzschlussring, das eine erhöhte elektrische Leitfähigkeit aufweist, reduzieren sich auch die elektrischen Verluste im Käfigläufer, was zu einer gesteigerten Energieeffizienz des Asynchronmotors führt.

In einer weiteren Ausgestaltung werden zusätzlich zu der Aluminiumschmelze als Leiter in den Nuten Einlegeteile, insbesondere Leiterstäbe verwendet. Dabei werden dann Kupferstäbe in den Nuten angeordnet, die dann zusammen mit der Aluminiumschmelze in den Kurzschlussringen und deren zumindest einem Einlegeteil einen elektrisch leitfähigen Käfig des Käfigläufers bilden.

Die Kurzschlussstäbe und Einlegeteile aus Kupfer erfüllen die Anforderungen bezüglich eines elektrisch hohen Leitwerts und bewirken somit einen guten elektrischen Wirkungsgrad für die gesamte Asynchronmaschine. Aluminium eignet sich aufgrund seines vergleichsweise geringen Schmelzpunkt mit 660°C für den Gießprozess, da deshalb und beim Gießen relativ geringe Anforderungen an das verwendete Werkzeug gestellt werden müssen.

Diese Materialauswahl hat weiterhin den Vorteil, dass der Käfigläufer durch die Kurzschlussringe aus Aluminium und Kupfer verhältnismäßig leicht ausgeführt werden kann. Dies führt zu einem geringeren Trägheitsmoment, was sich auf das Anlaufverhalten des Asynchronmotors positiv auswirkt. Dieser Vorteil ist insbesondere bei Antrieben entscheidend, bei dem häufige Drehrichtungsänderungen, wie z.B. Getriebemotoren im Reversierbetrieb oder Motoren bei Werkzeugmaschinen etc. auftreten.

Durch die beschriebenen Drehrichtungsänderungen und auch Lastwechseln, die eine Asynchronmaschine in Betrieb ausgesetzt ist, unterliegt der Käfigläufer auch Temperaturschwankungen, die wiederum mechanische Stresswirkungen im Käfigläufer erzeugen können. Derartige Belastungen können zu einem Abriss der Leiter von den Kurzschlussringen mit Einlegeteilen führen. Löst sich die Verbindung zwischen den Kurzschlussstäben und den eingegossenen Einlegeteilen, so erhöht sich der elektrische Widerstand an der Verbindungsstelle.

Dieser Anstieg des Übergangswiderstands hat wiederum negative Auswirkungen auf den Gesamtwirkungsgrad der Asynchronmaschine. Um diese Verbindungen stabil ausgestalten zu können, werden die Einlegeteile vor dem Einbringen in die Gussform teilweise beschichtet.

Dabei wird z.B. hier ein Beschichtungsverfahren angewandt, welches eine Legierungsschicht zwischen der Metallschmelze und den Einlegeteilen des Kurzschlussrings bewirkt. Eine solche Legierungsschicht wird vorteilhafterweise durch Galvanisieren aufgetragen. Durch Galvanisieren kann schon mit einer vergleichsweise dünnen Schichtdicke eine stabile Legierungsschicht erreicht werden.

Die Legierungsschicht zeichnet sich dadurch aus, dass zwischen den Stäben und den Kurzschlussringen eine mischkristalline Verbindung entsteht. Dadurch werden die Bindungskräfte zwischen den Kurzschlussringen und den Leiterstäben erheblich vergrößert. Die Verstärkung der Bindung zwischen den Leiterstäben und den Einlegeteilen kann in vorteilhafter Ausgestaltung dieser Erfindung dadurch weiter verbessert werden, indem die Einlegeteile zumindest teilweise vorab mit dem Material beschichtet werden, aus dem die Metallschmelze besteht.

Werden beispielsweise die Einlegeteile aus Kupfer verwendet und eine Metallschmelze aus Aluminium, so werden die Einlegeteile mit Hilfe eines Galvanisierungsverfahrens durch eine dünne Aluminiumschicht bedeckt. Die so beschichteten Einlegeteile werden, nachdem die Einlegeteile in der Gussform des Kurzschlussrings und optional in den Nuten platziert sind, mit der Aluminiumschmelze in Kontakt gebracht um die Leiter und die Kurzschlussringe mit den Einlegeteilen elektrisch zu kontaktieren.

Der sich daraus ergebende Käfigläufer ist deutlich robuster gegenüber Lastwechsel und den damit verbundenen Temperaturschwankungen.

Die Erfindung sowie vorteilhafte Ausgestaltungen der Erfindung werden anhand eines prinzipiell dargestellten Ausführungsbeispiels näher erläutert. Dabei zeigen:
- FIG 1: einen Längsschnitt durch eine Asynchronmaschine mit Käfigläufer,
- FIG 2: eine Detailansicht des Käfigläufers im Bereich des Kurzschlussrings,
- FIG 3: eine weitere Detailansicht des Käfigläufers im Bereich des Kurzschlussrings.

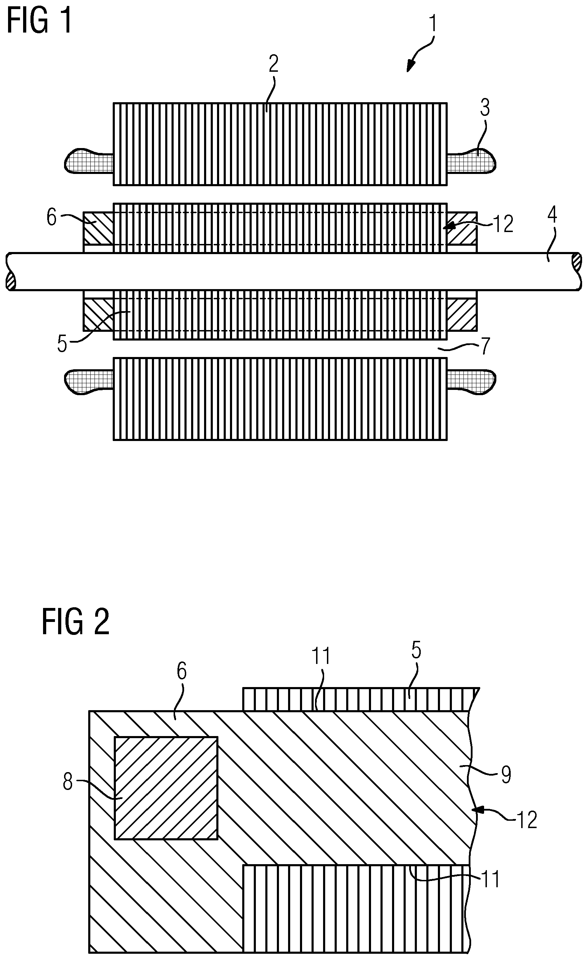

FIG 1 zeigt eine dynamoelektrische Maschine, in diesem Fall eine Asynchronmaschine 1 mit Käfigläufer 5 bzw. Rotor, die einen Stator 2 aufweist, dessen zu einem Luftspalt 7 weisende, nicht näher dargestellte Nuten ein Wicklungssystem 3 aufweisen, das mit einem Käfigläufer 5 elektromagnetisch wechselwirkt und so eine Drehung einer Welle 4 verursacht.

Um nunmehr eine robuste, kompakte und hocheffiziente Asynchronmaschine 1 zu erhalten, wird der Käfigläufer 5 erfindungsgemäß, insbesondere für größere Achshöhen größer 400 mm im Kurzschlussring 6 mit zumindest einem Einlegeteil 8 versehen, das im Herstellverfahren durch ein Material, vorzugsweise Aluminiumschmelze, umgossen wird. Der Käfigläufer 5 weist in diesem Fall Leiter 9 in im Wesentlichen axial verlaufenden Nuten 12 des Rotors auf, die aus einer Aluminiumschmelze gebildet sind. Der Kurzschlussring 6 weist eine Aluminiumschmelze die ein Einlegeteil 8, vorzugsweise aus Kupfer zumindest teilweise umgibt.

Eine weitere Ausgestaltung ist insofern möglich, dass ein Kupfereinlegeteil sich nicht nur im Bereich des Kurzschlussrings 6 befindet, sondern auch in den im Wesentlichen axial verlaufenden Nuten 12 des Rotors. Damit wird der gesamte Käfigläufer im wesentlichen durch Einlegeteile in der Nut und im Kurzschlussring durch ein gut leitfähiges Material, wie z.B. Kupfer gebildet, das bevorzugt eine Beschichtung aufweist, die mit der Aluminiumschmelze, die diese Kupferteile zumindest teilweise umgibt eine metallurgische Verbindung eingeht.

Dabei sind die Endbereiche der Einlegeteile in der Nut 10 des Rotors 5, also der vorgefertigten Leiterstäbe 10 mit einer speziellen Formgebung ausgestaltet, also z.B. geschlitzt ausgeführt. Diese Endbereiche der Leiterstäbe 10 ragen dabei in den Kurzschlussring 6.

FIG 2 zeigt in einer Detailansicht das Einlegeteil 8 in dem Kurzschlussring 6. Das Einlegeteil 8 weist einen nahezu quadratischen Querschnitt auf und verläuft torusförmig innerhalb des Kurzschlussrings 6. Besonders geeignet sind Formgebungen der Einlegeteile 8, die auf der Angussseite - also der Seite von der die Aluminium-Schmelze eingespeist wird - dem Gussprozesss wenig Strömungswiderstand entgegensetzen. Auf der anderen Seite des Käfigläufers 5 soll das Einlegeteil 8, derart geformt sein, dass es u.a. zu gleichmäßigen Verteilung und zu einer laminaren Strömung der Aluminium-Schmelze während der Herstellung führt, um eine Lunkerbildung zu vermeiden.

Der Käfigläufer 5, insbesondere der Kurzschlusskäfig weist dabei nun folgende Ausgestaltung auf.

Entweder sind die Leiter 9 komplett aus einem gegossen Material mit einer elektrischen Leitfähigkeit kleiner als die des Einlegeteils 8 im Kurzschlussring 6. Der Kurzschlussring 6 weist ein Einlegeteil 8 und geschmolzenes Material auf. Zum Beispiel könnte diese Ausgestaltung des Käfigläufers 5 ein Kupfer-Einlegeteil 8 im Kurzschlussring 6 aufweisen, das im verbleibenden Volumen im Kurzschlussring 6 also zwischen Innenkontur einer Gussform des Kurzschlussringes 6 und dem Einlegeteil 8, als auch in den Nuten 12 des Käfigläufers 5 eingegossenes Aluminium aufweist, wie in FIG 2 dargestellt.

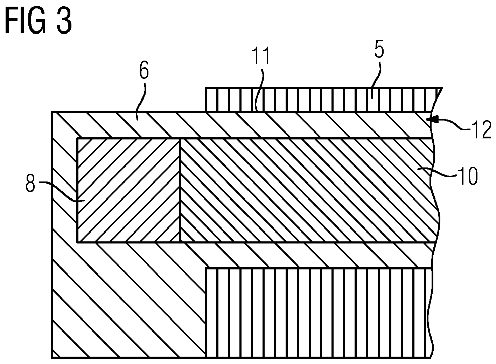

Alternativ ist der Käfigläufer 5, insbesondere der Kurzschlusskäfig gemäß FIG 3 folgendermaßen ausgeführt. In den Nuten 12 des Käfigläufers 5, als auch im Kurzschlussring 6 sind Einlegeteile aus einem gut leitfähigen Material, z.B. Kupfer. Die verbleibenden Hohlräume in der Nut 12 zwischen eingelegtem Leiterstab 10 zur Nutwand 11 und im Kurzschlussring 6 zwischen Einlegeteil 8 und Innenkontur einer Gussform, werden mit einem Material geringerer elektrischer Leitfähigkeit, also Aluminium ausgegossen. Der Leiterstab 10 muss dabei nicht zwangsläufig, wie in FIG 3 dargestellt, in direktem Kontakt zum Einlegeteil 8 des Kurzschlussrings 6 sein.

Dabei weist beispielsweise Kupfer eine elektrische Leitfähigkeit von 58 MS/m auf, während die elektrische Leitfähigkeit von Aluminium in dem Bereich von 33,5 bis 36 MS/m liegt.

Der Kurzschlussring 6 kann dabei bei allen Varianten bis zur Welle 4 reichen, um dadurch eine Wärmekopplung zur Welle 4 zu erhalten. Die radiale Ausdehnung des Kurzschlussringes 6 ist dabei maximal der Abstand von der Welle 4 bis zur radialen Außenkante des Blechpakets des Käfigläufers 5. Im Normalfall wird die radiale Ausdehnung des Kurzschlussringes 6 dazwischen liegen, aber nicht geringer als die radiale Höhe der Nut 12 sein. Die axiale Länge des Kurzschlussringes 6 - ohne ev. Lüfterflügel - entspricht zumindest der axialen Dicke des Einlegeteiles 8.

Ebenso können bei allen Varianten nicht näher bezeichnete Lüfterflügel auf der dem Blechpaket des Käfigläufers 5 abgewandten Seite angegossen sein.

Ebenso kann der Kurzschlussring 6 bei allen Varianten vom Blechpaket des Käfigläufers 5 axial beabstandet sein. Dies wird durch geeignete Gussformen und ggf. axial längere Leiterstäbe 10 gewährleistet.

Eine Asynchronmaschine mit einem derartigen Käfigläufer 5 eignet sich insbesondere aufgrund der größeren Achshöhen auch für Transportfahrzeug, Werkzeugmaschinen oder Antrieben in der Nahrungsmittelindustrie, Rohstoffindustrie, Verpackungsindustrie oder Bekleidungsindustrie.

## Patentansprüche

1. Käfigläufer (5) einer Asynchronmaschine (1), mit Leitern (9) in Nuten (12) eines magnetfeldführenden Läufers und im Bereich der Stirnseiten des magnetfeldführenden Läufers elektrisch leitende Kurzschlussringe (6), die die Leiter (9) elektrisch verbinden, welche Kurzschlussringe (6) zumindest zwei unterschiedlich elektrisch leitende Materialien aufweisen.

2. Käfigläufer (5) nach Anspruch 1, **dadurch gekennzeichnet, dass** in zumindest einem Kurzschlussring (6) zumindest ein Einlegeteil (8) vorgesehen ist.

3. Käfigläufer (5) nach Anspruch 1 oder 2, **dadurch gekennzeichnet, dass** die Einlegeteile (8) im Kurzschlussring (6) strömungstechnisch optimiert sind, um eine Lunkerbildung zu vermeiden.

4. Käfigläufer (5) nach einem der vorhergehenden Ansprüche, **dadurch gekennzeichnet, dass** die Einlegeteile (8), insbesondere im Kurzschlussring (6) identisch ausgebildet sind.

5. Asynchronmaschine (1) mit einem Käfigläufer (5) nach einem der vorhergehenden Ansprüche.

6. Verwendung einer Asynchronmaschine (1) nach Anspruch 5 bei einem Transportfahrzeug, einer Werkzeugmaschine oder einem Antrieb in der Nahrungsmittelindustrie, Rohstoffindustrie Verpackungsindustrie oder Bekleidungsindustrie.

7. Verfahren zur Herstellung eines Käfigläufers (5) nach Anspruch 1 bis 4 durch folgende Schritte:
- Bereitstellen eines magnetfeldführenden Läufers,
- Bereitstellen einer Gussform, die als Matrize für die Kontur eines Kurzschlussrings (6) des Käfigläufers (5) dient und im Bereich der Stirnseiten des magnetfeldführenden Läufers angeordnet ist,
dabei Einsetzen zumindest eines Einlegeteils (8) aus einem zweiten elektrisch leitfähigen Material zumindest in die Gussform,
- Eingießen einer Metallschmelze aus einem ersten elektrisch leitfähigen Material in die Nuten (12) oder verbleibende Nutenräume und in die zwischen der Innenkontur der Gussform und dem Einlegeteil (8) verbleibenden Zwischenräume des Kurzschlussrings (6),
- erstarren lassen der Metallschmelze.

8. Verfahren nach Anspruch 7, **dadurch gekennzeichnet, dass** ein Einlegen von Leiterstäben (10) in die Nuten (12) aus einem weiteren elektrisch leitfähigen Material, insbesondere zweiten Material vor dem Eingießen der Metallschmelze erfolgt.

9. Verfahren nach Anspruch 8, **dadurch gekennzeichnet, dass** zumindest ein Leiterstab (10) axial in den Bereich des Kurzschlussringes (6) ragt.

10. Verfahren nach einem der Ansprüche 7 bis 9, **da- durch gekennzeichnet,** dass der Leiterstab (10) in zumindest einem seiner Endbereich eine spezielle Formgebung aufweist, insbesondere geschlitzt ausgeführt ist.
